# EUROPÄISCHE PATENTSCHRIFT

(11) **EP 3 481 680 B1**
(45) Veröffentlichungstag und Bekanntmachung des Hinweises auf die Patenterteilung: **10.08.2022**
(21) Anmeldenummer: 17727184.8
(22) Anmeldetag: 29.05.2017
(51) Int. Cl.: B60R 25/24, G07C 9/00

(54) **VERFAHREN ZUM BETREIBEN EINES PASSIVEN ZUGANGSSYSTEMS FÜR EIN KRAFTFAHRZEUG MIT EINEM ID-GEBER**
METHOD FOR OPERATING A PASSIVE VEHICLE ACCESS SYSTEM WITH AN ID TOKEN
MÉTHODE DE FONCTIONNEMENT D'UN SYSTÈME D'ACCÈS PASSIVE POUR VÉHICULE AVEC JETON ID

(30) Priorität: 08.07.2016 DE 102016112548
(43) Veröffentlichungstag der Anmeldung: 15.05.2019
(73) Patentinhaber: Huf Hülsbeck & Fürst GmbH & Co. KG, 42551 Velbert (DE)
(72) Erfinder: ZILLER, Herr Boris, 40885 Ratingen (DE)
(86) Internationale Anmeldenummer: PCT/EP2017/062838
(87) Internationale Veröffentlichungsnummer: WO 2018/007066

(56) Entgegenhaltungen:
- DE-A1- 19 937 915
- DE-A1-102009 011 471
- DE-A1-102009 052 079
- DE-A1-102011 013 605
- DE-A1-102011 112 371
- FR-A1- 2 786 802

## Beschreibung

Die Erfindung betrifft ein Verfahren zum Betreiben eines passiven Zugangssystems für ein Kraftfahrzeug mit einem ID-Geber, der zum Entriegeln und/oder Verriegeln des Kraftfahrzeugs eine Funkkommunikation, insbesondere im LF-Bereich, mit einer in dem Kraftfahrzeug angeordneten Kraftfahrzeugsteuereinheit durchführt, wobei der ID-Geber zumindest eine Steuereinheit zum Durchführen der Funkkommunikation, einen Sensor, insbesondere einen Beschleunigungssensor, der einen Benutzerbewegungsablauf des ID-Gebers sensiert, und eine Speichereinheit zum Speichern eines vordefinierten Bewegungsablaufs des ID-Gebers umfasst, wobei in einem Ruhezustand des Sensors der ID-Geber, insbesondere die Steuereinheit, in einen Ruhemodus versetzt wird, bei welchem zumindest eine Funkkommunikation im LF-Bereich zwischen dem Kraftfahrzeug und dem ID-Geber ausgeschlossen ist. Aus dem Stand der Technik ist ein Verfahren zum Betreiben eines passiven Zugangssystems für ein Kraftfahrzeug mit einem ID-Geber bekannt. Der ID-Geber ist mit einem Beschleunigungssensor versehen. Wenn der ID-Geber für eine bestimmte Zeit ruht, wird der ID-Geber in einen Ruhemodus versetzt, in welchem eine Funkkommunikation zwischen dem Kraftfahrzeug und dem ID-Geber ausgeschlossen ist. Wenn der ID-Geber durch einen Benutzer bewegt wird, erkennt dies der Beschleunigungssensor und aktiviert den ID-Geber, so dass eine Funkkommunikation zwischen dem ID-Geber und dem Kraftfahrzeug wieder möglich ist. Der Sensor weist jedoch keine weitere Funktion auf. Er dient lediglich dazu, den ID-Geber im Rahmen des Relay-Station-Attacks zu sichern.

Daher ist es die Aufgabe der Erfindung, ein Verfahren bereitzustellen, welches den Komfort für einen Benutzer weiter erhöht.

Die Aufgabe wird dadurch gelöst, dass in der Speichereinheit mindestens ein vordefinierter Bewegungsablauf des ID-Gebers gespeichert ist, der einer Funktion des ID-Gebers zugeordnet ist, wobei derselbe Sensor beim Bewegen des ID-Gebers den Benutzerbewegungsablauf erfasst und mit dem in der Speichereinheit gespeicherten vordefinierten Bewegungsablauf vergleicht, und wenn der vordefinierte Bewegungsablauf mit dem Benutzerbewegungsablauf übereinstimmt, die Steuereinheit die Funktion ausführt. Durch diese Maßnahme wird der Komfort für den Benutzer weiter erhöht. Der ID-Geber ist zunächst sicher, wenn ein aus dem Stand der Technik bekannter Relay-Station-Attack durchgeführt wird. Bei dem Relay-Station-Attack handelt es sich im Zusammenhang mit einem berührungslosen passiven Zugangssystem um eine Art einer Nutzung durch einen Nichtberechtigten. Die Relay-Attacke basiert auf dem Prinzip, durch verlängernde Weiterleitung der Datenübertragung zwischen ID-Geber und kraftfahrzeugseitigem Steuergerät entgegen den tatsächlichen Verhältnissen vorzugeben, dass der ID-Geber und mit ihm der berechtigte Bediener sich in der Nähe des Kraftfahrzeugs befindet.

Der ID-Geber wird, wenn der in dem ID-Geber angeordnete Sensor, insbesondere Beschleunigungssensor, unbewegt bleibt, nach einer vorbestimmten Zeit in einen Ruhemodus versetzt, bei welchem eine Funkkommunikation im LF-Bereich zwischen dem Kraftfahrzeug und dem ID-Geber ausgeschlossen ist. Erfindungsgemäß wird dieser Sensor nicht nur zum Aktivieren und Deaktivieren der Funkkommunikation verwendet, sondern zusätzlich wird der Sensor benutzt, um Bewegungsabläufe zu detektieren. Der Bewegungsablauf kann eine Folge von Schüttel- oder Klopfbewegungen des ID-Gebers sein. Auch eine einzige Schüttel- oder Klopfbewegung kann bereits einen Bewegungsablauf definieren, der von dem Beschleunigungssensor sensiert wird. So kann beispielsweise ein einmaliges Klopfen auf dem Bewegungssensor als vordefinierter Bewegungsablauf in der Speichereinheit des ID-Gebers gespeichert werden. Diesem einmaligen Klopfen kann dann die Funktion des Verriegelns des Kraftfahrzeugs zugeordnet werden. Klopft nun der Benutzer einmal auf den ID-Geber, so erkennt der Beschleunigungssensor diesen Bewegungsablauf und vergleicht diesen mit dem vordefinierten in der Speichereinheit gespeicherten Bewegungsablauf. Sind diese im Wesentlichen identisch, so wird das Kraftfahrzeug entriegelt. Im Ergebnis weist der Sensor, insbesondere der Beschleunigungssensor, zwei Funktionen auf, und zwar zum einem einen Relay-Station-Attack zu verhindern, und zum anderen Bewegungsabläufe zu detektieren.

Nach einer bevorzugten Durchführung des Verfahrens kann vorgesehen sein, dass der vordefinierte Bewegungsablauf durch mindestens einen vom Sensor erfassten Beschleunigungswert und/oder der Zeit t definiert wird. Mit Hilfe diese Werte kann die Steuereinheit einfach programmiert werden. So kann man mit Hilfe der Zeit t und/oder des Beschleunigungswerts der Bewegungsablauf eindeutig beschrieben werden.

Man kann zufällig entstandene Bewegungsabläufe, welche durch den Sensor erfasst werden, herausfiltern, wenn der vordefinierte Bewegungsablauf innerhalb einer Mindestzeit t durchgeführt wird, wobei der vordefinierte Bewegungsablauf, vorzugsweise eine Höchstdauer von drei Sekunden aufweist. Wird durch den Sensor ein Bewegungsablauf erfasst, der länger als vorzugsweise 3 Sekunden dauert, dann ist dies ein unbewusster Bewegungsablauf des ID-Gebers, welcher nicht mit einem in der Speichereinheit hinterlegten vordefinierten Bewegungsablauf verglichen wird. Dieser unbewusste Bewegungsablauf wird dann verworfen und es wird keine Funktion am ID-Geber aufgrund des unbewussten Bewegungsablaufs ausgeführt. Es kann von Vorteil sein, wenn der vordefinierte Bewegungsablauf durch einen Benutzer erzeugt wird und dieser vom Benutzer erzeugte vordefinierte Bewegungsablauf in der Speichereinheit gespeichert wird. Somit kann der Benutzer, welcher beispielsweise der Besitzer des Kraftfahrzeugs ist, gemäß seiner Vorstellung den vordefinierten Bewegungsablauf bestimmen. Der Komfort wird dadurch für den Benutzer weiter erhöht, weil er flexibel bei der Erstellung der Bewegungsabläufe ist. So kann der Benutzer gegebenenfalls auch einen Bewegungsablauf in der Speichereinheit des ID-Gebers löschen oder überschreiben und den ID-Geber mit seinen persönlich definierten Bewegungsabläufen versehen. Dies ist besonders vorteilhaft, wenn der Benutzer sein Kraftfahrzeug verkauft und ein neuer Benutzer bzw. Besitzer den Bewegungsablauf nach seinen Wünschen konfigurieren möchte. Der Komfort kann für den Benutzer weiter erhöht werden, wenn jedem vordefinierten Bewegungsablauf eine unterschiedliche Funktion zugeordnet wird. So kann der Benutzer mehrere vordefinierte Bewegungsabläufe in der Speichereinheit abspeichern und jedem vordefinierten Bewegungsablauf eine bestimmte Funktion zuordnen. Beispielsweise kann ein einmaliges Klopfen auf dem ID-Geber ein Entriegeln des Kraftfahrzeugs und ein zweimaliges Klopfen ein Verriegeln des Kraftfahrzeugs bewirken.

Der Speichervorgang ist schnell und einfach am ID-Geber durchführbar, wenn der Benutzer zuerst eine Funktion am ID-Geber bestimmt und durch eine anschließende Bewegung des ID-Gebers der Sensor einen Bewegungsablauf erfasst, der in dem Speicher als vordefinierter Bewegungsablauf abgespeichert wird und der ausgewählten Funktion zugeordnet wird.

Um den ID-Geber gegen einen Relay-Station-Attack zu sichern, kann vorgesehen sein, dass mindestens einer vordefinierten Bewegung das Abschalten des passiven Zugangssystems zugeordnet ist, so dass der ID-Geber in den Ruhemodus überführt wird. Der Benutzer kann somit bewusst die Funkkommunikation zwischen dem ID-Geber und dem Kraftfahrzeug deaktivieren.

Sehr komfortabel kann das Verfahren durchgeführt werden, wenn mindestens einer vordefinierten Bewegung das Einschalten des passiven Zugangssystems zugeordnet ist, so dass der ID-Geber in einen Betriebsmodus überführt wird, bei welchem die Funkkommunikation zwischen dem ID-Geber und dem Kraftfahrzeug im LF-Bereich durchgeführt wird.

Um einfach und schnell Informationen über den Betriebsstatus des ID-Gebers zu erhalten, kann vorgesehen sein, dass mindestens ein vordefinierter Bewegungsablauf eine Statusanzeige, insbesondere eine LED, am ID-Geber aktiviert.

Die Erfindung wird anhand eines Ausführungsbeispiels näher beschrieben

Das erfindungsgemäße Verfahren dient zum Betreiben eines passiven Zugangssystems für ein Kraftfahrzeug mit einem ID-Geber. Bei einem passiven Zugangssystem ist das Kraftfahrzeug mit einem Türgriff ausgebildet, welcher beispielsweise einen kapazitiven Sensor aufweist. Nähert sich ein Benutzer mit dem ID-Geber dem Kraftfahrzeug und nähert sich mit seiner Hand dem Türgriff an, dann erkennt der kapazitive Sensor die Hand und löst eine Funkkommunikation, insbesondere im LF-Bereich , zwischen einer in dem Kraftfahrzeug angeordneten Kraftfahrzeugsteuereinheit und dem ID-Geber aus, um das Kraftfahrzeug zu entriegeln und/oder zu verriegeln. Der ID-Geber weist zumindest eine Steuereinheit zum Durchführen der Funkkommunikation, einen Sensor, insbesondere einen Beschleunigungssensor, der einen Benutzerbewegungsablauf des ID-Gebers sensiert, und eine Speichereinheit zum Speichern eines vordefinierten Bewegungsablaufs des ID-Gebers auf.

Um einen Relay-Station-Attack zu verhindern, wird der ID-Geber, insbesondere die Steuereinheit, nach einer vorbestimmten Zeit in einen Ruhemodus versetzt, bei welchem zumindest eine Funkkommunikation im LF-Bereich zwischen dem Kraftfahrzeug, insbesondere der Kraftfahrzeugsteuereinheit, und dem ID-Geber ausgeschlossen ist. Dabei erkennt der Sensor, dass sich der ID-Geber, beispielsweise für eine Zeitdauer von 30 Sekunden, in einem ruhenden Zustand befindet und die Steuereinheit sorgt dafür, dass die Funkkommunikation im LF-Bereich zwischen dem Kraftfahrzeug und dem ID-Geber ausgeschlossen ist. Somit ist der ID-Geber gegen einen Relay-Station-Attack gesichert. Der Sensor weist jedoch noch eine zweite Funktion auf. Der Sensor ist grundsätzlich in der Lage einen Bewegungsablauf des ID-Gebers zu erfassen, welcher in der Speichereinheit des ID-Gebers abgespeichert werden kann. Im Rahmen dieser Erfindung wird zwischen einem vordefinierten Bewegungsablauf und dem Benutzerbewegungsablauf unterschieden. Der vordefinierte Bewegungsablauf wird durch mindestens einen vom Sensor erfassten Beschleunigungswert und/oder der Zeit t definiert. Um einen vordefinierten Bewegungsablauf in der Speichereinheit des ID-Gebers abzuspeichern, kann der Benutzer beispielsweise eine Taste oder Tastenkombination auf dem ID-Geber betätigen, um den Programmiervorgang zu starten. Der Benutzer muss danach einen vordefinierten Bewegungsablauf erzeugen, indem er den ID-Geber beispielsweise schüttelt oder klopft. Der vordefinierte Bewegungsablauf wird innerhalb einer Mindestzeit t durchgeführt, wobei der vordefinierte Bewegungsablauf, vorzugsweise eine Höchstdauer von drei Sekunden aufweist. Dabei kann der Benutzer den vordefinierten Bewegungsablauf frei wählen, so dass folglich der vordefinierte Bewegungsablauf eine bewusste Handlung des Benutzers darstellt. Der Sensor erfasst den vordefinierten Bewegungsablauf. Anschließend kann der Benutzer eine Taste auf dem ID-Geber betätigen, die mit einer Funktion belegt ist. Diese Funktion wird dann der vordefinierten Bewegung zugeordnet und in der Speichereinheit des ID-Gebers abgespeichert. So kann beispielsweise ein einmaliges Klopfen auf dem ID-Geber einem Entriegelungsvorgang des Kraftfahrzeugs zugeordnet werden. Weiter kann ein zweimaliges Klopfen auf dem ID-Geber einem Verriegelungsvorgang des Kraftfahrzeugs zugeordnet werden und ein dreimaliges Klopfen das Öffnen der Heckklappe zugeordnet werden. Um den ID-Geber beispielsweise gegen einen Relay-Station-Attack zu sichern, kann einer vordefinierten Bewegung das Abschalten des passiven Zugangssystems zugeordnet werden, so dass der ID-Geber in den Ruhemodus überführt wird. Wenn der Benutzer den ID-Geber wieder benutzen möchte, kann eine vordefinierten Bewegung das Einschalten des passiven Zugangssystems zugeordnet werden, so dass der ID-Geber in einen Betriebsmodus überführt wird, bei welchem die Funkkommunikation zwischen dem ID-Geber und dem Kraftfahrzeug im LF-Bereich durchgeführt wird. Des Weiteren kann einem vordefinierter Bewegungsablauf eine Statusanzeige, insbesondere eine LED, am ID-Geber aktiviert. So kann beispielsweise bei einem mit einem Display versehenen ID-Geber der Bildschirm aktiviert werden. Ergo ist jedem einzelnen vordefinierten Bewegungsablauf eine unterschiedliche Funktion zugeordnet.

Wenn der Benutzer nun eine Funktion mit dem ID-Geber ausführen möchte, welche bereits einer vordefinierten Bewegung zugeordnet ist, muss der Benutzer die Benutzerbewegung durchführen.

Wie bereits oben beschrieben ist in der Speichereinheit mindestens ein vordefinierter Bewegungsablauf des ID-Gebers gespeichert, der einer Funktion des ID-Gebers zugeordnet ist. Derselbe Sensor, welcher im Rahmen des Relay-Station-Attacks den ID-Geber in den Ruhemodus überführt, erfasst beim Bewegen des ID-Gebers den Benutzerbewegungsablauf. Nachdem der Benutzer den Benutzerbewegungsablauf durchgeführt hat, wird dieser mit dem in der Speichereinheit gespeicherten vordefinierten Bewegungsablauf verglichen, und wenn der vordefinierte Bewegungsablauf mit dem Benutzerbewegungsablauf übereinstimmt, führt die Steuereinheit die Funktion aus.

Alternativ kann der ID-Geber auch anstatt der Tasten ein Display aufweisen. Die Tasten werden mittels einer Software, insbesondre mit Hilfe einer downloadbaren App aus dem Internet, auf dem Display dargestellt. In diesem Fall kann die Programmierung des vordefinierten Bewegungsablaufs auch über die App durchgeführt werden.

## Patentansprüche

1. Verfahren zum Betreiben eines passiven Zugangssystems für ein Kraftfahrzeug mit einem ID-Geber, der zum Entriegeln und/oder Verriegeln des Kraftfahrzeugs eine Funkkommunikation, insbesondere im LF-Bereich, mit einer in dem Kraftfahrzeug angeordneten Kraftfahrzeugsteuereinheit durchführt, wobei der ID-Geber zumindest
- eine Steuereinheit zum Durchführen der Funkkommunikation,
- einen Sensor, insbesondere einen Beschleunigungssensor, der einen Benutzerbewegungsablauf des ID-Gebers sensiert, und
- eine Speichereinheit zum Speichern eines vordefinierten Bewegungsablaufs des ID-Gebers umfasst,
wobei wenn der ID-Geber für eine bestimmte Zeit ruht der ID-Geber, insbesondere die Steuereinheit, in einen Ruhemodus versetzt wird, bei welchem zumindest eine Funkkommunikation im LF-Bereich zwischen dem Kraftfahrzeug und dem ID-Geber ausgeschlossen ist,
**dadurch gekennzeichnet, dass**
in der Speichereinheit mindestens ein vordefinierter Bewegungsablauf des ID-Gebers gespeichert ist, der einer Funktion des ID-Gebers zugeordnet ist, wobei derselbe Sensor beim Bewegen des ID-Gebers den Benutzerbewegungsablauf erfasst und mit dem in der Speichereinheit gespeicherten vordefinierten Bewegungsablauf vergleicht, und wenn der vordefinierte Bewegungsablauf mit dem Benutzerbewegungsablauf übereinstimmt, die Steuereinheit die Funktion ausführt.

2. Verfahren nach Anspruch 1, **dadurch gekennzeichnet, dass** der vordefinierte Bewegungsablauf durch mindestens einen vom Sensor erfassten Beschleunigungswert und/oder der Zeit t definiert wird.

3. Verfahren nach Anspruch 1 oder 2, **dadurch gekennzeichnet, dass** der vordefinierte Bewegungsablauf innerhalb einer Mindestzeit t durchgeführt wird, wobei der vordefinierte Bewegungsablauf, vorzugsweise eine Höchstdauer von drei Sekunden aufweist.

4. Verfahren nach mindestens einem Ansprüche 1 bis 3, **dadurch gekennzeichnet, dass** der vordefinierte Bewegungsablauf durch einen Benutzer erzeugt wird und dieser vom Benutzer erzeugte vordefinierte Bewegungsablauf in der Speichereinheit gespeichert wird.

5. Verfahren nach mindestens einem Ansprüche 1 bis 4, **dadurch gekennzeichnet, dass** der vordefinierte Bewegungsablauf durch einen Benutzer frei wählbar ist und eine bewusste Handlung des Benutzers abbildet.

6. Verfahren nach mindestens einem Ansprüche 1 bis 5, **dadurch gekennzeichnet, dass** jedem vordefinierten Bewegungsablauf eine unterschiedliche Funktion zugeordnet wird.

7. Verfahren nach mindestens einem Ansprüche 1 bis 6, **dadurch gekennzeichnet, dass** der Benutzer zuerst eine Funktion am ID-Geber bestimmt und durch eine anschließende Bewegung des ID-Gebers der Sensor einen Bewegungsablauf erfasst, der in dem Speicher als vordefinierter Bewegungsablauf abgespeichert wird und der ausgewählten Funktion zugeordnet wird.

8. Verfahren nach mindestens einem Ansprüche 1 bis 7, **dadurch gekennzeichnet, dass** mindestens einer vordefinierten Bewegung das Abschalten des passiven Zugangssystems zugeordnet ist, so dass der ID-Geber in den Ruhemodus überführt wird.

9. Verfahren nach mindestens einem Ansprüche 1 bis 8, **dadurch gekennzeichnet, dass** mindestens einer vordefinierten Bewegung das Einschalten des passiven Zugangssystems zugeordnet ist, so dass der ID-Geber in einen Betriebsmodus überführt wird, bei welchem die Funkkommunikation zwischen dem ID-Geber und dem Kraftfahrzeug im LF-Bereich durchgeführt wird.

10. Verfahren nach mindestens einem Ansprüche 1 bis 9, **dadurch gekennzeichnet, dass** mindestens ein vordefinierter Bewegungsablauf eine Statusanzeige, insbesondere eine LED, am ID-Geber aktiviert.

## Claims

1. Method for operating a passive access system for a motor vehicle, having an ID transmitter which exchanges wireless communication, particularly in the LF range, with a control unit arranged inside the vehicle in order to unlock and/or lock the vehicle, wherein the ID transmitter comprises at least
- a control unit for exchanging the wireless communication,
- a sensor, particularly an acceleration sensor, which senses a user motion sequence of the ID transmitter, and
- a memory unit for storing a predefined motion sequence of the ID transmitter,
wherein when the ID transmitter is idle for a certain time, the ID transmitter, in particular the control unit, is placed in a standby mode, in which at least a wireless communication in the LF range between the motor vehicle and the ID transmitter is impossible,
**characterized in that**
at least one predefined motion sequence of the ID transmitter which is assigned to a function of the ID transmitter is stored in der memory unit,
wherein the same sensor detects the user motion sequence when the ID transmitter moves and compares it with the predefined motion sequence stored in the memory unit, and if the predefined motion sequence matches the user motion sequence, the control unit performs the function.

2. Method according to Claim 1, **characterized in that** the predefined motion sequence is defined by at least one acceleration value detected by the sensor and/or time t.

3. Method according to Claim 1 or 2, **characterized in that** the predefined motion sequence is executed within a minimum time t, wherein the predefined motion sequence preferably has a maximum duration of three seconds.

4. Method according to at least one of Claims 1 to 3, **characterized in that** the predefined motion sequence is created by a user, and said predefined motion sequence created by the user is stored in the memory unit.

5. Method according to at least one of Claims 1 to 4, **characterized in that** the predefined motion sequence is freely selectable by a user and reflects a deliberate action on the part of the user.

6. Method according to at least one of Claims 1 to 5, **characterized in that** a different function is assigned to each predefined motion sequence.

7. Method according to at least one of Claims 1 to 6, **characterized in that** the user first defines a function on the ID transmitter and the sensor detects a motion sequence through a subsequent movement of the ID transmitter, which motion sequence is stored in the memory as a predefined motion sequence and assigned to the chosen function.

8. Method according to at least one of Claims 1 to 7, **characterized in that** the switching off of the passive access system is assigned to at least one predefined movement, causing the ID transmitter to be placed in the standby mode.

9. Method according to at least one of Claims 1 to 8, **characterized in that** the switching on of the passive access system is assigned to at least one predefined movement, causing the ID transmitter to be placed in an operating mode, in which the wireless communication is exchanged in the LF range between the ID transmitter and the motor vehicle.

10. Method according to at least one of Claims 1 to 9, **characterized in that** at least one predefined motion sequence activates a status display, in particular an LED, on the ID transmitter.

## Revendications

1. Procédé destiné à faire fonctionner un système d'accès passif pour un véhicule automobile avec un transmetteur d'identifiant, qui effectue une radiocommunication, en particulier dans la gamme de basses fréquences (BF), avec une unité de commande de véhicule automobile disposée dans le véhicule automobile pour le déverrouillage et/ou le verrouillage du véhicule automobile, sachant que le transmetteur d'identifiant comprend au moins
- une unité de commande pour effectuer la radiocommunication,
- un détecteur, en particulier un capteur d'accélération, qui détecte une séquence de mouvements d'utilisateur du transmetteur d'identifiant, et
- une unité de mémorisation permettant de mémoriser une séquence de mouvements prédéfinie du transmetteur d'identifiant,
sachant que lorsque le transmetteur d'identifiant se tient au repos pour un temps déterminé, le transmetteur d'identifiant, en particulier l'unité de commande, est placé dans un mode de repos pour lequel au moins une radiocommunication est exclue dans la gamme de BF entre le véhicule automobile et le transmetteur d'identifiant,
**caractérisé en ce qu'**
au moins une séquence de mouvements prédéfinie du transmetteur d'identifiant est mémorisée dans l'unité de mémorisation, qui est attribuée à une fonction du transmetteur d'identifiant,
sachant que ce même détecteur saisit la séquence de mouvements d'utilisateur lors du mouvement du transmetteur d'identifiant et le compare à la séquence de mouvements prédéfinie mémorisée dans l'unité de mémorisation et lorsque la séquence de mouvements prédéfinie coïncide avec la séquence de mouvements d'utilisateur, l'unité de commande exécute la fonction.

2. Procédé selon la revendication 1, **caractérisé en ce que** la séquence de mouvements prédéfinie est définie par au moins une valeur d'accélération saisie par le capteur et/ou le temps « t ».

3. Procédé selon la revendication 1 ou 2, **caractérisé en ce que** la séquence de mouvements prédéfinie est effectuée à l'intérieur d'un temps minimal « t », sachant que la séquence de mouvements prédéfinie comporte de préférence une durée maximale de trois secondes.

4. Procédé selon au moins l'une des revendications 1 à 3, **caractérisé en ce que** la séquence de mouvements prédéfinie est produite par un utilisateur et que cette séquence de mouvements prédéfinie produite par l'utilisateur est mémorisée dans l'unité de mémorisation.

5. Procédé selon au moins l'une des revendications 1 à 4, **caractérisé en ce que** la séquence de mouvements prédéfinie peut être librement sélectionnée par un utilisateur et reproduit une manipulation consciente de l'utilisateur.

6. Procédé selon au moins l'une des revendications 1 à 5, **caractérisé en ce qu'**une fonction différente est attribuée à chaque séquence de mouvements prédéfinie.

7. Procédé selon au moins l'une des revendications 1 à 6, **caractérisé en ce que** l'utilisateur détermine d'abord une fonction sur le transmetteur d'identifiant et le capteur saisit une séquence de mouvements par un mouvement suivant du transmetteur d'identifiant, qui est mémorisée dans la mémoire en tant que séquence de mouvements prédéfinie, et est attribuée à la fonction sélectionnée.

8. Procédé selon au moins l'une des revendications 1 à 7, **caractérisé en ce qu'**au moins l'arrêt du système d'accès passif est attribué à un mouvement prédéfini de telle manière que le transmetteur d'identifiant est transféré en mode de repos.

9. Procédé selon au moins l'une des revendications 1 à 8, **caractérisé en ce qu'**au moins la mise en marche du système d'accès passif est attribuée à un mouvement prédéfini de telle manière que le transmetteur d'identifiant soit transféré en un mode de fonctionnement, pour lequel la radiocommunication est effectuée entre le transmetteur d'identifiant et le véhicule automobile dans une gamme de basses fréquences (BF) .

10. Procédé selon au moins l'une des revendications 1 à 9, **caractérisé en ce qu'**au moins une séquence de mouvements prédéfinie active un affichage d'état, en particulier une DEL (Diode électroluminescente), sur le transmetteur d'identifiant.
